# EUROPEAN PATENT SPECIFICATION

(11) **EP 4 338 071 B1**
(45) Date of publication and mention of the grant of the patent: **25.11.2026**
(21) Application number: 22808224.4
(22) Date of filing: 10.05.2022
(51) Int. Cl.: G06F 21/32, G06F 21/36, H04L 9/08, G06V 40/18, H04L 9/32, G06V 40/50, G06V 10/776

(54) **MULTI-FACTOR AUTHENTICATION SYSTEM AND METHOD**
MULTIFAKTOR-AUTHENTIFIZIERUNGSSYSTEM UND -VERFAHREN
SYSTÈME ET PROCÉDÉ D'AUTHENTIFICATION MULTIFACTEURS

(30) Priority: 13.05.2021 US 202163188356 P
(43) Date of publication of application: 20.03.2024
(73) Proprietor: Visa International Service Association, San Francisco, California 94128 (US)
(72) Inventor: ARORA, Sunpreet Singh, San Francisco, CA 94128 (US); LEDDY, William, San Francisco, CA 94128 (US); GU, Shengfei, San Francisco, CA 94128 (US); XU, Minghua, San Francisco, CA 94128 (US)
(74) Representative: EIP
(86) International application number: PCT/US2022/028634
(87) International publication number: WO 2022/240907

(56) References cited:
- KR-A- 20180 121 594
- US-A1- 2014 125 574
- US-A1- 2014 125 574
- US-A1- 2015 227 735
- US-A1- 2017 318 019
- US-A1- 2017 318 019
- US-A1- 2017 346 817
- US-A1- 2017 346 817
- US-A1- 2019 164 156

## Description

### CROSS-REFERENCE TO RELATED APPLICATIONS

This application is a PCT application which claims priority to U.S. provisional application no. 63/188,356, filed on May 13, 2021.

### BACKGROUND

Authentication processes for authenticating users to a computer are known. However, it is sometimes difficult to authenticate some types of users, such as those that may be physically disabled. For instance, some users may not have the ability to move their arms or legs. Even if they could provide authentication data to a computer with the help of an assistant, it may be difficult for the computer to determine if the user intends to interact with the computer or to access a particular resource via the computer because the user is unable to move. As an illustration, a quadriplegic user may have a caregiver put retinal scanner close to the user's eye so that the user could attempt to access an account on host site on run on a server computer. Although the user can be authenticated with the scan of the user's retina, the server computer may be unable to determine the user's liveness or awareness that the user specifically intends to interact with the server computer.

Another issue that can relate to both disabled and non-disabled users is whether the user that is attempting to authenticate themselves is providing a real biometric or a manufactured biometric (e.g., a prefabricated digital image of a retinal scan). An unauthorized user can use the manufactured biometric to access a resource that they are not entitled to access, thereby creating security issues.

Yet other issues relating to authentication can relate to the efficiency and confidence level associated with an authentication procedure. For instance, secure authentication often uses something that you know, something that you have, and something that you are. One common way to authenticate would be to require a password to access a Website and then send a one-time password to the user's phone for the user to enter into the Website. This would only validate that the user knows the password and that the user has a pre-registered device. This procedure would also require the user to perform multiple steps (e.g., password entry, receipt of a one-time password, and entry of the one-time password). Such conventional processes are not efficient and cannot be easily used by users that may have certain physical disabilities.

Embodiments of the invention address these and other problems, individually and collectively. The patent applications US 2019/164156 A1 and US 2017/318019 A1 are considered relevant prior art.

### BRIEF SUMMARY

Embodiments of the invention provide for improved methods and systems for authentication. The invention is defined in the independent claims. Advantageous features are described in the dependent claims.

One embodiment of the invention includes a method comprising: receiving, by a client computer (100) from a server computer (200), a challenge (C) and an object list (L); displaying, by the client computer (100), objects from the object list (L) to a user; determining, by the client computer (100), that the user has visually selected an object (I') from the object list (L); moving, by the client computer (100), the selected object (I') on a display of the client computer (100) according to screen coordinates (S); capturing, by the client computer (100), a biometric (B') of the user; comparing, by the client computer (100) the biometric (B') to another biometric (B) stored in the client computer (100) to provide a first comparison output; comparing, by the client computer (100), a derivative of the selected object (I') to a derivative of an object (I) stored in the client computer (100) to produce a second comparison output; signing, by the client computer (100), the challenge (C) with a private key; and sending, by the client computer (100) to the server computer (200), the signed challenge, wherein the server computer (200) then verifies the signed challenge (C) with a public key corresponding to the private key and provides access to a resource after the signed challenge is verified and the first and second comparison outputs are verified.

Another embodiment includes a client computer comprising: a processor; a display coupled to the processor; and a non-transitory computer readable medium comprising code, executable by the processor, for performing operations including: receiving, from a server computer (200), a challenge (C) and an object list (L), displaying, on the display, objects from the object list (L) to a user, determining that the user has visually selected an object (I') from the object list (L), moving the selected object (I') on the display of the client computer (100) according to screen coordinates (S), capturing a biometric (B') of the user, comparing, (100) the biometric (B') to another biometric (B) stored in the client computer (100) to provide a first comparison output, comparing, a derivative of the selected object (I') to a derivative of an object (I) stored in the client computer (100) to produce a second comparison output, signing the challenge (C) with a private key, and sending, to the server computer (200), the signed challenge, wherein the server computer (200) then verifies the signed challenge (C) with a public key corresponding to the private key and provides access to a resource after the signed challenge is verified and the first and second comparison outputs are verified.

Another embodiment includes a method comprising: transmitting, by a server computer (200) to a client computer (100), a challenge (C) and an object list (L), wherein the client computer is programmed to display objects from the object list (L) to a user, determine that the user has visually selected an object (I') from the object list (L), move the selected object (I') on a display of the client computer (100) according to screen coordinates (S), capture a biometric (B') of the user, compare the biometric (B') to another biometric (B) stored in the client computer (100) to provide a first comparison output, compare a derivative of the selected object (I') to a derivative of an object (I) stored in the client computer (100) to produce a second comparison output, and sign the challenge (C) with a private key; receiving, by the server computer (200) the signed challenge; verifying, by the server computer (200) the signed challenge (C) with a public key corresponding to the private key; and providing access to a resource after the signed challenge is verified and the first and second comparison outputs are verified.

These and other embodiments are described in further detail below.

### BRIEF DESCRIPTION OF THE DRAWINGS

FIG. 1 shows a diagram of an enrollment process according to an embodiment
FIG. 2 shows a diagram of an authentication process according to an embodiment.
FIG. 3 shows a block diagram of a client computer according to an embodiment.
FIG. 4 shows a block diagram of a server computer according to an embodiment.
FIGs. 5A-5B show arrays of objects on consecutive under interface screens according to embodiments.

### DETAILED DESCRIPTION

Embodiments of the disclosure can include authentication systems that can be used by users. In some embodiments, the users can be disabled and may not have the ability to move their arms or legs, or possibly even their head. In some cases, their only means of communication may be through their eyes.

Prior to discussing embodiments of the invention, some terms can be discussed in detail.

A "key" may include a piece of information that is used in a cryptographic algorithm to transform input data into another representation. A cryptographic algorithm can be an encryption algorithm that transforms original data into an alternate representation, or a decryption algorithm that transforms encrypted information back to the original data. Examples of cryptographic algorithms may include triple data encryption standard (TDES), data encryption standard (DES), advanced encryption standard (AES), etc.

A "public key" may include an encryption key that may be shared openly and publicly. The public key may be designed to be shared and may be configured such that any information encrypted with the public key may only be decrypted using a private key associated with the public key (i.e., a public/private key pair).

A "private key" may include any encryption key that may be protected and secure. A private key may be securely stored at an entity and may be used to decrypt any information that has been encrypted with an associated public key of a public/private key pair associated with the private key.

A "public/private key pair" may refer to a pair of linked cryptographic keys generated by an entity. The public key may be used for public functions such as encrypting a message to send to the entity or for verifying a digital signature which was supposedly made by the entity. The private key, on the other hand may be used for private functions such as decrypting a received message or applying a digital signature. In some embodiments, the public key may be authorized by a body known as a Certification Authority (CA) which stores the public key in a database and distributes it to any other entity which requests it. The private key can typically be kept in a secure storage medium and will usually only be known to the entity. Public and private keys may be in any suitable format, including those based on Rivest-Shamir-Adleman (RSA) or elliptic curve cryptography (ECC).

A "processor" may refer to any suitable data computation device or devices. A processor may comprise one or more microprocessors working together to accomplish a desired function. The processor may include a CPU comprising at least one high-speed data processor adequate to execute program components for executing user and/or system-generated requests. The CPU may be a microprocessor such as AMD's Athlon, Duron and/or Opteron; IBM and/or Motorola's PowerPC; IBM's and Sony's Cell processor; Intel's Celeron, Itanium, Pentium, Xeon, and/or XScale; and/or the like processor(s).

A "memory" may be any suitable device or devices that can store electronic data. A suitable memory may comprise a non-transitory computer readable medium that stores instructions that can be executed by a processor to implement a desired method. Examples of memories may comprise one or more memory chips, disk drives, etc. Such memories may operate using any suitable electrical, optical, and/or magnetic mode of operation.

A "user" may include an individual. In some embodiments, a user may be associated with one or more personal accounts and/or user devices.

A "credential" may be any suitable information that serves as reliable evidence of worth, ownership, identity, or authority. A credential may be a string of numbers, letters, or any other suitable characters that may be present or contained in any object or document that can serve as confirmation.

A "client device" or "client computer" (these terms may be used interchangeably) may be any suitable device that can interact with a user and that can interact with a server computer. In some embodiments, a client device may communicate with or may be at least a part of a server computer. Client devices may be in any suitable form. Some examples of client devices include cellular phones, personal digital assistants (PDAs), personal computers (PCs), tablet PCs, set-top boxes, electronic cash registers (ECRs), kiosks, and security systems, and the like.

A "server computer" may include a powerful computer or cluster of computers. For example, the server computer can be a large mainframe, a minicomputer cluster, or a group of servers functioning as a unit. In one example, the server computer may be a database server coupled to a Web server. The server computer may comprise one or more computational apparatuses and may use any of a variety of computing structures, arrangements, and compilations for servicing the requests from one or more client computers.

A "voice assistant module" can be a digital assistant module that uses voice recognition, natural language processing and speech synthesis to provide aid to users through phones and voice recognition applications. Voice assistants can be built on artificial intelligence (AI), machine learning and voice recognition technology. As the end user interacts with the digital assistant, the AI programming uses sophisticated algorithms to learn from data input and improve at predicting the user's needs. Some assistants are built with more advanced cognitive computing technologies which will allow a digital assistant to understand and carry out multistep requests with numerous interactions and perform more complex tasks, such as booking seats at a movie theater. Examples of voice assistant modules can include software that is in Apple's Siri^{™}, Microsoft's Cortana^{™}, and Amazon's Alexa^{™}.

A "biometric sample" includes data that can be used to uniquely identify an individual based upon one or more intrinsic physical or behavioral traits. For example, a biometric sample may include retinal scan and tracking data (i.e., eye movement and tracking where a user's eyes are focused). Further examples of biometric samples include a face, fingerprint, voiceprint, palm print, DNA, body scan, etc.

A "biometric template" can be a digital reference of distinct characteristics that have been extracted from a biometric sample provided by a user. Biometric templates are used during a biometric authentication process. Data from a biometric sample provided by a user at the time of authentication can be compared against previously created biometric templates to determine whether the provided biometric sample closely matches one or more of the stored biometric templates. The data may be either an analog or digital representation of the user's biometric sample. For example, a biometric template of a user's face may be image data, and a biometric template of a user's voice may be an audio file. Biometric templates can further include date representing measurements of any other intrinsic human traits or distinguishable human behaviors, such as fingerprint data, retinal scan data, deoxyribonucleic acid (DNA) date, palm print data, hand geometry date, iris recognition data, vein geometry data, handwriting style data, and any other suitable data associated with physical or biological aspects of an individual. For example, a biometric template may be a binary mathematical file representing the unique features of an individual's fingerprint, eye, hand or voice needed for performing accurate authentication of the individual.

A "biometric reader" may refer to a device for measuring a biometric. Examples of biometric readers may include fingerprint readers, front-facing cameras, microphones, iris scanners, retinal scanners, and DNA analyzers.

A "threshold" can be a minimum prescribed level and/or value. For example, a threshold can identify or quantify what degree of similarity is needed between two biometric templates (or other data) for the two biometric templates to qualify as a match. As an illustration, fingerprints contain a certain number of identifying features, if a threshold (e.g., 90%) amount of identifying features of a newly measured fingerprint are matched to a previously measured fingerprint, then the two fingerprints can be considered a match (and the probability that both fingerprints are from the same person may be high). Setting an appropriate threshold to ensure an acceptable level of accuracy and/or confidence would be appreciated by one of ordinary skill in the art.

Embodiments can include an authentication system that can be universal. For example, it can be used by people with disabilities, e.g., paraplegics and quadriplegics, or it can be used by people without such disabilities. Embodiments can also satisfy at least 2 out of 3 of "something you know", "something you have", "something you are." Further, embodiments of the invention can be easy to install and use. Embodiments can also be easily integrated with resource providers such as merchants (e.g., physical or online), and can be FIDO (fast identity online) compliant.

Some embodiments can employ a software-only solution that can be used with a client device such as a personal computer without requiring any custom hardware. Embodiments can also use existing hardware in the client device including a built-in camera, screen, microphone, speaker, fingerprint sensor and a keyboard. Some embodiments can use a secure channel to transfer a captured authenticator (e.g., a retinal scan) and cryptographic keys to a SE/TEE (secure element/trusted execution environment) in the computer for secure storage and key management. Embodiments of the invention can also allow a client device such as a personal computer to connect directly to server computer such as a FIDO (fast identity online) server computer.

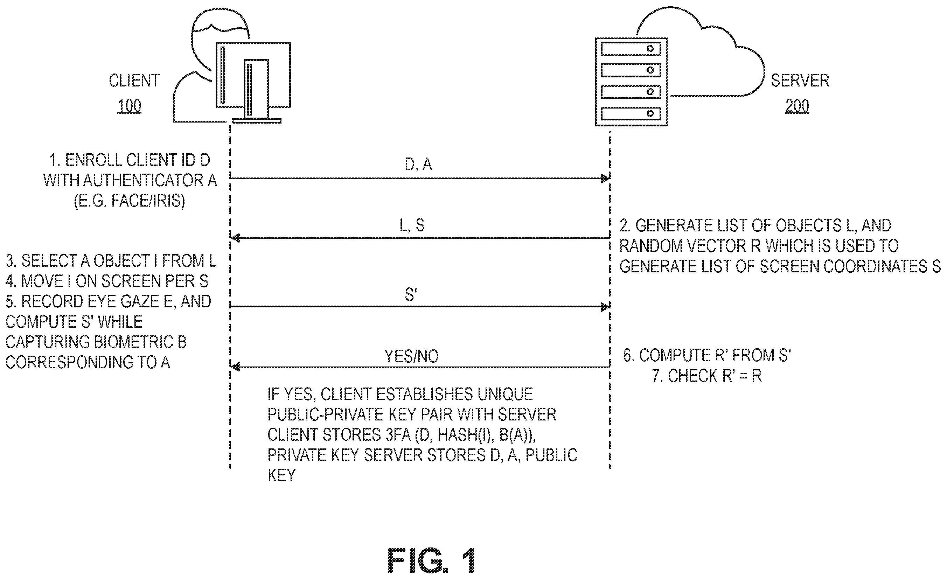

FIG. 1 shows a client computer 100 and a server computer 200 in communication with each other. FIG. 1 also shows a method of a user of the client computer 100 enrolling in an authentication scheme with the server computer.

The communication networks that allow the entities in FIG. 1 to communicate may include any suitable communication medium. The communication network may be one and/or the combination of the following: a direct interconnection; the Internet; a Local Area Network (LAN); a Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like. Message between the entities, providers, networks, and devices illustrated in FIG. 1 may be transmitted using a secure communications protocols such as, but not limited to, File Transfer Protocol (FTP); HyperText Transfer Protocol (HTTP); Secure Hypertext Transfer Protocol (HTTPS), Secure Socket Layer (SSL), Transportation Layer Security (TLS), and the like.

A user using a client computer 100 may wish to access content or data provided by the server computer 200. The server computer 200 could operate a host site such as a merchant Website, a social network Website, a government Website, or any other type of site that can be a way for the user to obtain a resource of some type. In some cases, the user may have a disability which may not allow the user to interact with the client computer 100 in a way that other non-disabled users may interact with it. For example, the user may not have the ability to move their arms, but may still wish to access content or data provided by the server computer 200.

In step 1, the user using the client computer 100 may enroll a user with a client identifier or "ID" D and an authenticator A. The client computer 100 may transmit this information to the server computer 200. The client ID D could be a username or number that could be selected from a list of possible usernames displayed in the client computer 100. The authenticator A may be a type of authentication (such as biometric retinal scan) that the user will use when authenticating themselves to the server computer 200 in the future.

In step 2, after receiving the information in step 1, the server computer 200 can generate a list of objects L, and a random vector R, which is used to generate a list of screen coordinates S. The list of objects L can be images of objects such as images of playing cards, animals, items, or any images that can be visually identified by the user. The random vector R may be a set of random variables that can correspond to screen coordinates on a screen of the client computer 100. Those randomized screen coordinates can be used to randomize the placement of the objects L on the screen so that the user's eye movement may be tracked.

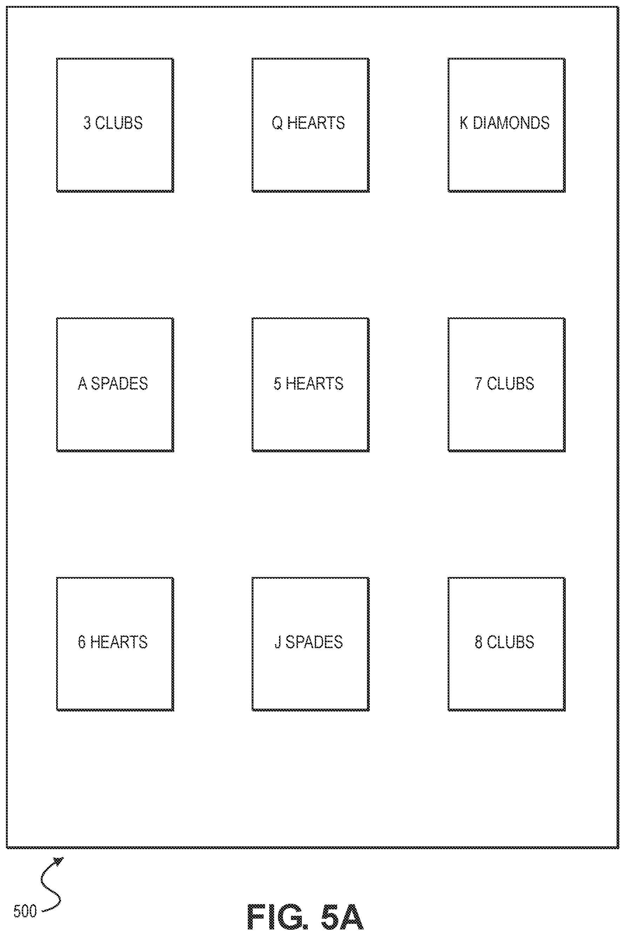

As an illustration, an array of nine objects is shown on a display 500 in FIG. 5A, and those objects may correspond to a set of screen coordinates and vector elements as shown in Table 1 below. An initial correspondence between the screen coordinates and the vector elements may be stored in the client computer.

| Table 1 | | |
|---|---|---|
| Object name | Coordinates | Vector element |
| 3 clubs | 1, 1 | 1 |
| Q hearts | 1, 2 | 2 |
| K diamonds | 1, 3 | 3 |
| A spades | 2, 1 | 4 |
| 5 hearts | 2, 2 | 5 |
| 7 clubs | 2, 3 | 6 |
| 6 hearts | 3, 1 | 7 |
| J spades | 3, 2 | 8 |
| 8 clubs | 3, 3 | 9 |

A random number generator in the server computer 200 may be used to create the vector R (e.g., [4, 8, 2, 1, 7, 9, 5, 3, 6]). For example, the random number generator may generate nine random numbers and each random number of successively associated with the numbers 1-9. The nine random numbers may be arranged from the lowest to the highest, and the corresponding numbers 1-9 may be re-ordered accordingly. The vector elements may then be re-ordered according to the random new order of the vector elements and the screen-coordinates may be correspondingly re-arranged.

| Table 2 | | |
|---|---|---|
| Object name | Coordinates | Vector element |
| 3 clubs | 2, 1 | 4 |
| Q hearts | 3, 2 | 8 |
| K diamonds | 1, 2 | 2 |
| A spades | 1, 1 | 1 |
| 5 hearts | 3, 1 | 7 |
| 7 clubs | 3, 3 | 9 |
| 6 hearts | 2, 2 | 5 |
| J spades | 1, 3 | 3 |
| 8 clubs | 2, 3 | 6 |

In step 3, the user may select an image of one object on the screen. In some cases, the user may not have the use of his hands so the user may only use her eyes to focus on the selected image. In some embodiments, a camera in the client computer can track the movement of the user's eyes. Eye tracking technologies are known and are described, for example, in "A Multidisciplinary Study of Eye Tracking Technology for Visual Intelligence," Educ. Sci. 2020, 10, 195; doi:10.3390/educsci10080195 www.mdpi. If the objects in the list of objects L are cards (see e.g., FIG. 5A), then the client computer 100 could prompt the user to pick a card from a number of cards that are displayed. The screen coordinates S can then be used to move the cards around the screen and the user may be instructed to follow the selected card on the screen.

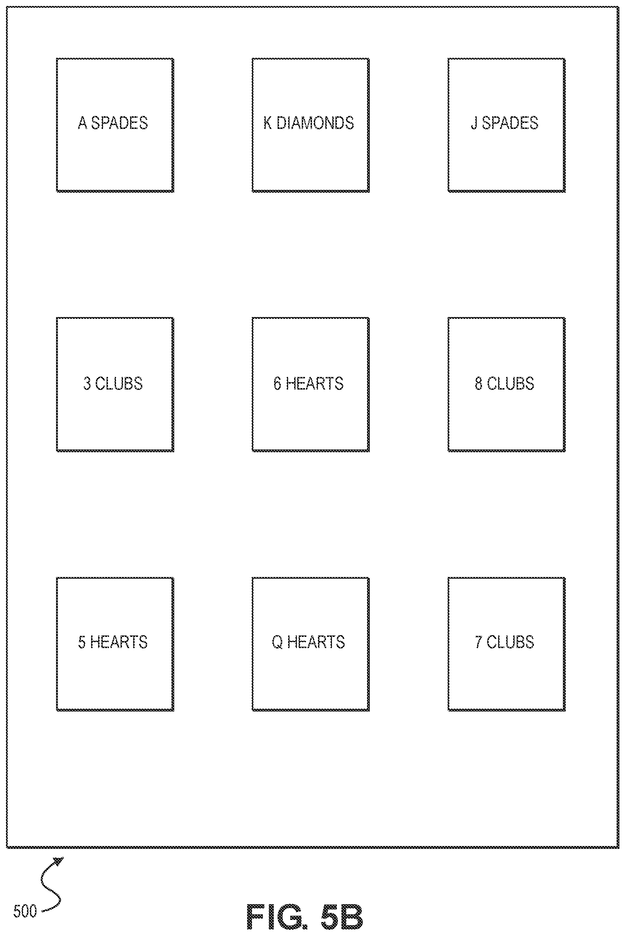

In step 4, the user can track the movement of the selected image I on the screen as it moves per the screen coordinates S. For example, with reference to FIG. 5A, the user of the client computer may select the card "A spades" and may follow the movement of the card to its new position as shown in FIG. 5B.

In step 5, eye tracker/camera in the client computer 100 can record the eye gaze E, and can compute S' while capturing the biometric B corresponding the authenticator A. S' may be the list of coordinates (e.g., [2,1] and [1,1]) corresponding to the user's eye movements. S' can then be transmitted from the client computer 100 to the server computer 200.

The exemplary list of coordinates S, S' in described above is simplified for clarity of illustration. It is understood that the list of screen coordinates S, S' can be longer and more complex. For example, a list of coordinates could include multiple, complex movements for each of multiple objects in the object list as they move across a screen.

In steps 6 and 7, the server computer 200 computes R' from S' and then checks that R' = R. The server computer 200 checks to see that the movement of the object I corresponds to the movement expected by the server computer 200. If R' = R, then this serves as a liveness check to ensure that the user using the client computer 100 is participating in the enrollment process. In other embodiments, the client computer 100 can determine R' from S', and can transmit R' to the server computer 200, which can check to see if R' = R.

If R' = R, then the client computer 100 establishes a unique public-private key pair with the server computer 200. That is, the server computer 200 can send an instruction to the software on the client computer 100 to generate a public-private key pair and to hash the selected object or an identifier of the selected object. The public key of the key pair can be transmitted to the server computer 200, while the private key is stored in the client computer 100. The client computer 100 stores data associated with a multi-factor authentication process including the user ID D, the hash of the selected object (I), the biometric B(A), and the private key. The biometric B(A) could be a biometric template of the user, such as a face scan or retinal scan of the user which is captured by the client computer 100 and stored therein. The server computer 200 stores the client ID D, the authenticator A (e.g., face, iris, etc.), and the public key.

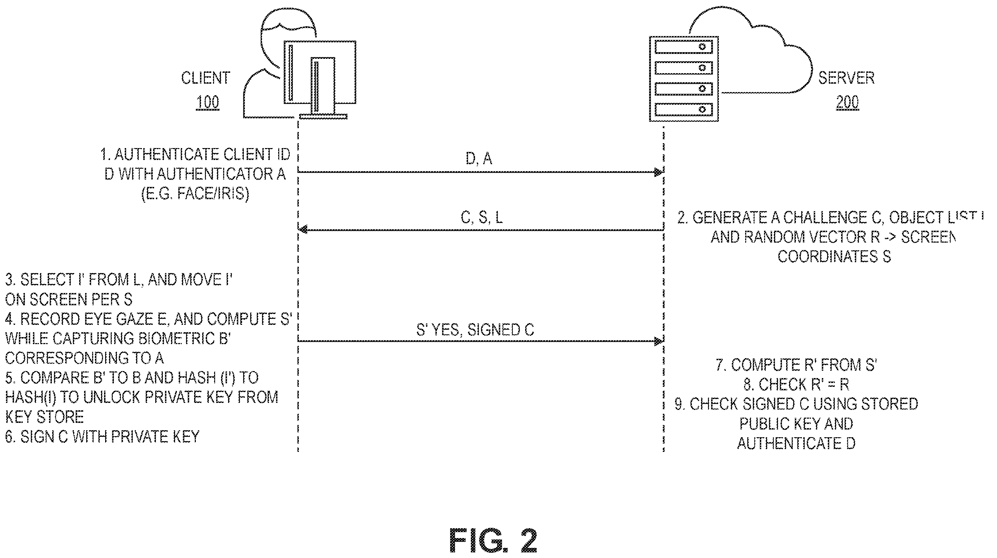

After enrollment is completed, an authentication process can be performed with the server computer 200 as in FIG. 2. The authentication process can be used in conjunction with a user's request to access a resource provided by the server computer 200 or another computer.

In step 1, the client computer 100 can send (e.g., transmit) the client ID D and the authenticator A to the server computer 200.

At step 2, after receiving the client ID D and the authenticator A from the client computer 100, the server computer 200 can verify the client ID D and the authenticator A, and then generate a challenge C (e.g., a random number or phrase), a random vector R, an object list, and list of screen coordinates S corresponding to the random vector R. Note that R in FIG. 2 may be different (or the same) as the R in FIG. 1. The use of the random vector R can be used to check for liveness of the user. The challenge C, the screen coordinates S, and the object list L may be sent from the server computer 200 to the client computer 100 and can be received by the client computer 100.

In some embodiments, only the random vector R and the challenge C can be sent from the server computer 200 to the client computer 100. In such embodiments, the object list and an initial mapping of the screen coordinates to vector elements may be already in the client computer 100. Once the screen coordinates S and the challenge C are received by the client computer 100, the objects from the object list L can be displayed on a display of the client computer 100 so that they can be viewed by the user of the client computer 100. The objects can be displayed in a one- or two-dimensional, or multi-dimensional array on a screen in some embodiments.

At steps 3-4, the user may use her eyes to select an object I' from the object list L. The object may move according to the list of screen coordinates S generated from the random vector R. For example, the objects may be originally shown as in FIG. 5A, but then may be re-arranged as in FIG. 5B. The eye tracking camera on the client computer 100 can record the eye gaze E and can compute another list of screen coordinates S' while capturing the biometric B' corresponding to the authenticator A. For example, the biometric B' can be a retinal scan which can be captured while the eye tracking camera is tracking the user's eyes, or before tracking and object selection occurs. The client computer 100 can recognize that the user has followed a particular object (e.g., A spades). The client computer 100 can hash the object (e.g., hash an identifier for the object) to form hash (I') and can generate the list of coordinates S'.

At step 5, the client computer 100 can compare B' to B and can compare hash (I) to hash (I'). In some embodiments, the outputs of these comparisons can be characterized as first and second comparison outputs, respectively. If both are equal, then the software on the client device 100 may release the private key from the key store in the client computer 100. The client computer 100 may then sign the challenge C with the private key to produce a signed challenge C. The client computer 100 then sends S', data (e.g., "yes") regarding the confirmation that B' = B, and hash (I) = hash (I'), and the signed challenge C.

In some embodiments, the comparison of the biometrics B and B' can result in a likelihood indicator and a positive match may be determined if the likelihood indicator is above a threshold. For example, if B and B' have a 95% match result (e.g., 95% of the features of the templates B and B' match), and the threshold for a match is 90%, then the client computer 100 can determine that B and B' match.

Although hashes of the stored and selected objects I and I' are described, it is understood that other derivatives (e.g., encryptions) of the selected objects I and I' may be used.

At steps 7-8, the server computer 200 can compute R' from S' and can check if R' = R (to check for liveness). Note that steps 7-8 could be performed by the client computer 100 instead of the server computer 200 in some embodiments. In such embodiments, the client computer 100 could simply send a verification of the check of R' = R, or could use a zero-knowledge proof to share this information with the server compute 200. In yet other embodiments, instead of sending S' from the client computer 100 to the server computer 200, the client computer 100 could determine R' and send R' to the server computer 200.

At step 9, the server computer 200 can check (e.g., verify) the signed challenge C using the stored public key, and can then authenticate the user.

After the signed challenge C is validated by the server computer 200, the server computer 200 can provide access to any desired content or data to the client computer 100.

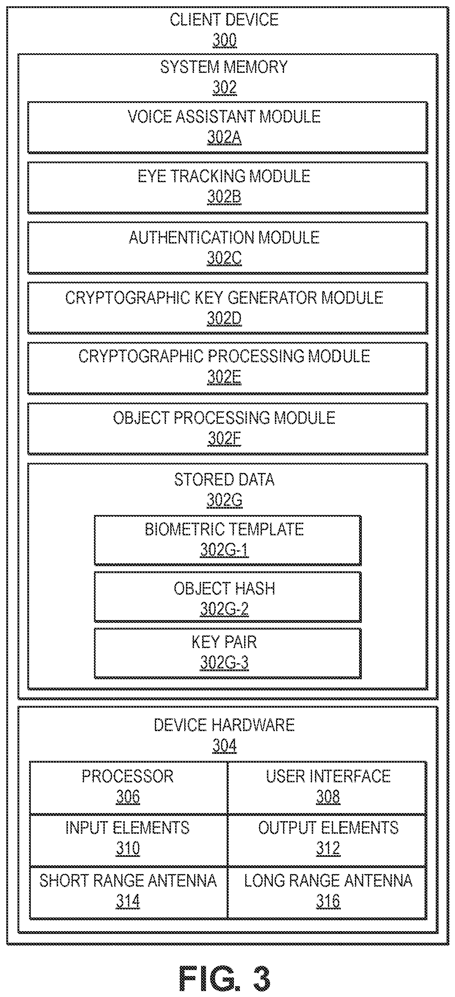

FIG. 3 illustrates a client device 300 according to an embodiment. Mobile client device 300 may include device hardware 304 coupled to a system memory 302.

Device hardware 304 may include a processor 306, a short-range antenna 314, a long-range antenna 316, input elements 310, a user interface 308, and output elements 312 (which may be part of the user interface 308). Examples of input elements may include microphones, keypads, touchscreens, sensors, cameras, biometric readers, etc. Examples of output elements may include speakers, display screens, and tactile devices. The processor 306 can be implemented as one or more integrated circuits (e.g., one or more single core or multicore microprocessors and/or microcontrollers) and is used to control the operation of client device 300. The processor 306 can execute a variety of programs in response to program code or computer-readable code stored in the system memory 302 and can maintain multiple concurrently executing programs or processes.

The long-range antenna 316 may include one or more RF transceivers and/or connectors that can be used by client device 300 to communicate with other devices and/or to connect with external networks. The user interface 308 can include any combination of input and output elements to allow a user to interact with and invoke the functionalities of client device 300. The short-range antenna 809 may be configured to communicate with external entities through a short-range communication medium (e.g. using Bluetooth, Wi-Fi, infrared, NFC, etc.). The long-range antenna 819 may be configured to communicate with a remote base station and a remote cellular or data network, over the air.

The system memory 302 can be implemented using any combination of any number of non-volatile memories (e.g., flash memory) and volatile memories (e.g., DRAM, SRAM), or any other non-transitory storage medium, or a combination thereof media. The system memory 302 may store computer code, executable by the processor 805, for performing any of the functions described herein. For example, the system memory 302 may comprise a computer readable medium comprising code, executable by the processor 306, for implementing operations comprising: receiving, from a server computer, a challenge and an object list; displaying, on the display, objects from the object list to a user; determining that the user has visually selected an object from the object list; moving the selected object on the display of the client computer according to screen coordinates; capturing a biometric of the user; comparing, the biometric to another biometric stored in the client computer to provide a first comparison output; comparing, a derivative of the selected object to a derivative of an object stored in the client computer to produce a second comparison output; signing the challenge with a private key, and sending, to the server computer, the signed challenge, wherein the server computer then verifies the signed challenge with a public key corresponding to the private key and provides access to a resource after the signed challenge is verified and the first and second comparison outputs are verified.

The system memory 302 may also store a voice assistant module 302A, an eye tracking module 302B, an authentication module 302C, a cryptographic key generator module 302D, a cryptographic processing module 302E, an object processing module 302F, and stored data 302G. The stored data 302E may comprise a biometric template 302G-1 of the user, and an object hash 302G-2 of an of an object selected by the user.

The voice assistant module 302A may comprise code, executable by the processor 306, to receive voice segments, and generate and analyze data corresponding to the voice segments. The voice assistant module 302 and the processor 306 may also generate voice prompts or may cause the client device 300 to talk to the user.

The eye tracking module 302B may comprise code, executable by the processor 306, to track eye movements of the user of the client device 300, and to process data relating to user eye movements.

The authentication module 302C may comprise code, executable by the processor 306, to authenticate a user or a client device. This can be performed using user secrets (e.g., passwords) or user biometrics, client IDs, data associated with the user, etc.

The cryptographic key generation module 302D may comprise code, executable by the processor 306 to generate cryptographic keys. The cryptographic key generate module can use an RSA (Rivest, Shamir, and Adleman) key generation process such as Hyper Crypt or PuTTY Key Generator.

The cryptographic processing module 302E may comprise code, executable by the processor 306 to perform cryptographic processing such as encrypting data, decrypting data, generating digital signatures, and verifying digital signatures.

The object processing module 302F can comprise code, executable by the processor 306 to select objects in a list or array of objects, hash an object, rearrange and display objects, store the hashed object, and compare hashed objects.

The stored data 302G may comprise data that can be used in some of the functional modules. The biometric template 302G-1 of the user of the client device 300 can be used by the authentication module 302C to authenticate the user. The object hash 302G-2 can be generated by the object processing module 302F, and the object hash 302G-2 can be compared with other object hashes created in the future. The key pair 302G-3 can be the public-private key pair described above.

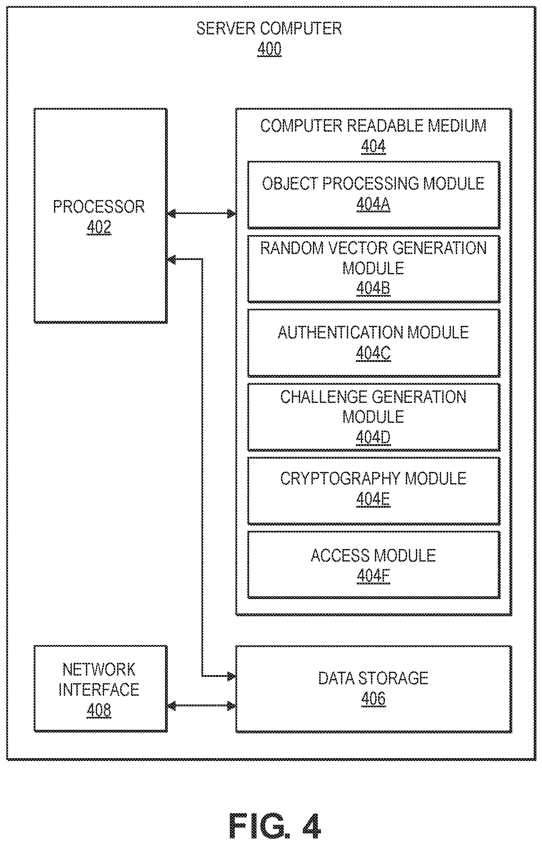

FIG. 4 shows a block diagram of a server computer 400 according to an embodiment. The processing computer 400 may comprise a processor 402, which may be coupled to a non-transitory computer readable medium 404, data storage 406, and a network interface 408. The data storage 406 may contain stored random vectors, screen coordinates, user identifiers, client device identifiers, etc.

The computer readable medium 404 may comprise a number of software modules including an object processing module 404A, a random vector generation module 404B, an authentication module 404C, a challenge generation module 404D, a cryptography module 404E, and an access module 404F.

The object processing module 404A can comprise code executable by the processor 402 to generate a list of objects and present them to a client device. The list of objects can include object identifiers as well as images of objects.

The random vector generation module 404B can comprise code executable by the processor 402 to generate a random vector that can be associated with screen coordinates, which can be used to randomly place objects on a client device display. The random vector generation module 404B may use a random number generator.

The authentication module 404C can comprise code executable by the processor 402 to authenticate client devices and users of the client devices. The authentication module 402 and the processor 402 can verify a client device ID and an authenticator and can perform any other suitable device or user authentication process.

The challenge generation module 404D can comprise code executable by the processor 402 to generate challenges. The challenges may be random and may be generated using a random number generator, or they may be selected from a list of pre-defined challenges.

The cryptography module 404E can comprise code executable by the processor 402 to perform cryptographic processing such as encrypting data, decrypting data, signing data, and verifying data.

The access module 404F can comprise code executable by the processor 402 to provide access to a resource to a client device or a user of the client device.

The computer readable medium 404 may comprise code, executable by the processor 402 to perform operations comprising: transmitting to a client computer, a challenge and an object list, wherein the client computer is programmed to display objects from the object list to a user, determine that the user has visually selected an object from the object list, move the selected object on a display of the client computer according to screen coordinates, capture a biometric of the user, compare the biometric to another biometric stored in the client computer to provide a first comparison output, compare a derivative of the selected object to a derivative of an object stored in the client computer to produce a second comparison output, and sign the challenge with a private key; receiving the signed challenge; verifying, the signed challenge with a public key corresponding to the private key; and providing access to a resource after the signed challenge is verified and the first and second comparison outputs are verified.

Embodiments of the invention have several advantages. Embodiments of the invention can enable 3FA by providing "something you have" - device/PC, "something you know" - a selected object, and "something you are" - biometric (face/iris). Embodiments do not require built in Touch/Face ID and is compatible with old PCs. Embodiments also have strong liveness check guarantees. Active liveness based on random vector prevents replay attacks. Embodiments can also capture user consent, authenticity, and liveness in one user action, and embodiments are easy to use for people with disabilities, e.g., paraplegics and quadriplegics.

Yet other embodiments of the invention may relate to methods of enrollment. One embodiment of the invention may include: transmitting, by a client computer (100), a client identifier (D) to a server computer (200), wherein the server computer (200) generates an object list (L), a random vector (R), and a list of screen coordinates (S); receiving, by the client computer (100), the object list (L) and the list of screen coordinates (S); receiving, by the client computer (100) from a user, a selection of an object (I) from the object list (L); moving by the client computer (100) the object (I) according to the list of screen coordinates (S); capturing, by the client computer (100), the user's eye gaze as the object (I) moves; determining, by the client computer (100), an updated list of screen coordinates (S') based on the user's eye gaze; transmitting, by the client computer (100) the updated list of screen coordinates (S') or a computed vector (R') to the server computer (200); and receiving, by the client computer (100) from the server computer (200), a confirmation that the server computer (200) has verified the updated list of screen coordinates (S') or the computed random vector (R'). In some embodiments, after receiving the confirmation, the client computer (100) can generate a public-private key pair and can send the public key to the server computer (200).

Yet other embodiments include a client computer that is programmed to perform the above method, and systems including the client computer.

Yet another embodiment includes a method comprising: receiving, by a server computer (200) from a client computer (100), a client identifier (D); generating, by the server computer (200) an object list (L), a random vector (R), and a list of screen coordinates (S); transmitting, by the server computer (200) to the client computer (100), the object list (L) and the list of screen coordinates (S), wherein the client computer (100) receives a selection of an object (I) from the object list (L) from the user, moves the object (I) according to the list of screen coordinates (S), captures the user's eye gaze as the object (I) moves, determines an updated list of screen coordinates (S') based on the user's eye gaze, and transmits the updated list of screen coordinates (S') or a computed vector (R') to the server computer (200); and transmitting, by the server computer (200) to the client computer (100), a confirmation that the server computer (200) has verified the updated list of screen coordinates (S') or the computed random vector (R'). In some embodiments, after receiving the confirmation, the client computer (100) can generate a public-private key pair and can send the public key to the server computer (200).

Yet other embodiments include a server computer that is programmed to perform the above method, and systems including the server computer.

Any of the software components or functions described in this application, may be implemented as software code to be executed by a processor using any suitable computer language such as, for example, Java, C++ or Perl using, for example, conventional or object-oriented techniques. The software code may be stored as a series of instructions, or commands on a computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus, and may be present on or within different computational apparatuses within a system or network.

The above description is illustrative and is not restrictive. Many variations of the invention may become apparent to those skilled in the art upon review of the disclosure. The scope of the invention can, therefore, be determined not with reference to the above description, but instead can be determined with reference to the pending claims along with their full scope or equivalents.

One or more features from any embodiment may be combined with one or more features of any other embodiment without departing from the scope of the invention.

A recitation of "a", "an" or "the" is intended to mean "one or more" unless specifically indicated to the contrary.

All patents, patent applications, publications, and descriptions mentioned above are herein incorporated by reference in their entirety for all purposes. None is admitted to be prior art.

## Claims

1. A method comprising:
receiving, by a client computer and from a server computer, a challenge;
displaying, by the client computer, objects from an object list to a user;
determining, by the client computer, that the user has visually selected an object from the object list;
moving, by the client computer, the selected object on a display of the client computer according to screen coordinates;
capturing, by the client computer, a biometric of the user;
comparing, by the client computer the biometric to another biometric stored in the client computer to provide a first comparison output;
comparing, by the client computer, a derivative of the selected object to a derivative of an object stored in the client computer to produce a second comparison output;
releasing, by the client computer, a private key from a key store of the client computer based on i) a determination, from the first comparison output, that the captured biometric of the user and the stored biometric match and ii) a determination, from the second comparison output, that the derivative of the selected object and the derivative of the stored object match;
signing, by the client computer, the challenge with the released private key; and
sending, by the client computer and to the server computer, the signed challenge, for verification, by the server computer, of the signed challenge with a public key corresponding to the released private key.

2. The method of claim 1, wherein other objects in the object list are also moved according to the screen coordinates, wherein the object list is received with the challenge, and wherein the method further comprises:
before receiving the challenge and the object list, transmitting, by the client computer, a client ID and an authenticator to the server computer, wherein the server computer thereafter generates i) the screen coordinates based upon a random vector, ii) the challenge and iii) the object list, and wherein the screen coordinates are sent by the server computer to the client computer.

3. The method of claim 1 or 2, wherein the screen coordinates and the object list are received by the client computer from the server computer along with the challenge.

4. The method of any of claims 1 to 3, wherein the objects in the object list are displayed on the display of the client computer in a one or two-dimensional array.

5. The method of any of claims 1 to 4, wherein determining, by the client computer, that the user has visually selected the object from the object list comprises detecting eye movement of the user and determining by an eye tracking module in the client computer that the user has visually selected the object.

6. The method of any of claims 1 to 5, wherein the biometric is a retinal scan of the user.

7. The method of any of claims 1 to 6, wherein capturing the biometric of the user occurs before the user visually selects the object.

8. The method of any of claims 1 to 7, wherein the challenge is a random number.

9. The method of any of claims 1 to 8, wherein the first comparison output comprises a likelihood indicator.

10. The method of any of claims 1 to 9, wherein the derivative of the selected object and the derivative of the object are hash values.

11. The method of any of claims 1 to 10, further comprising:
determining, by the client computer, screen coordinates corresponding to eye movements of the user as the user's eyes follow the selected object as the selected object moves according to the screen coordinates, and wherein the client computer sends the determined screen coordinates to the server computer, and
wherein the server computer determines that the determined screen coordinates match the screen coordinates or determines that a determined vector from the determined screen coordinates corresponds to a random vector corresponding to the screen coordinates.

12. The method of claim 11, wherein the client computer determines that the determined screen coordinates match the screen coordinates, or determines that a determined random vector from the determined screen coordinates corresponds to the random vector to produce a third comparison output, and wherein the client computer sends the third comparison output to the server computer.

13. The method of any of claims 1 to 12, wherein a random vector and the object list are received by the client computer from the server computer along with the challenge, and wherein the screen coordinates are based on the random vector, and wherein the method further comprises:
determining, by the client computer, screen coordinates corresponding to eye movements of the user as the user's eyes follow the selected object as the selected object moves according to the determined screen coordinates, and wherein the client computer sends the determined screen coordinates or a determined random vector corresponding to the determined screen coordinates to the server computer, and
wherein the server computer determines that the determined screen coordinates match the previously sent screen coordinates or determines that a determined vector from the determined screen coordinates corresponds to the random vector.

14. A client computer comprising:
a processor;
a display coupled to the processor; and
a non-transitory computer readable medium comprising code, executable by the processor, for performing a method according to any of the preceding claims.

15. A method comprising:
transmitting, by a server computer to a client computer, a challenge, displaying, by the client computer, objects from an object list to a user;
determining, by the client computer, that the user has visually selected an object from the object list;
moving, by the client computer, the selected object on a display of the client computer according to screen coordinates;
capturing, by the client computer, a biometric of the user;
comparing, by the client computer, the biometric to another biometric stored in the client computer to provide a first comparison output;
comparing, by the client computer, a derivative of the selected object to a derivative of an object stored in the client computer to produce a second comparison output; releasing, by the client computer, a private key from a key store of the client computer based on
i) a determination, from the first comparison output, that the captured biometric of the user and the stored biometric match and
ii) a determination, from the second comparison output, that the derivative of the selected object and the derivative of the stored object match; and
signing, by the client computer, the challenge with a private key;
receiving, by the server computer the signed challenge;
verifying, by the server computer the signed challenge with a public key corresponding to the released private key; and
providing access to a resource after the signed challenge is verified and the first and second comparison outputs are verified.

## Patentansprüche

1. Verfahren, Folgendes umfassend:
Empfangen, durch einen Client-Computer und von einem Server-Computer, einer Abfrage;
Anzeigen, durch den Client-Computer, von Objekten aus einer Objektliste an einen Benutzer;
Bestimmen, durch den Client-Computer, dass der Benutzer visuell ein Objekt aus der Objektliste ausgewählt hat;
Bewegen, durch den Client-Computer, des ausgewählten Objekts auf einer Anzeige des Client-Computers gemäß Bildschirmkoordinaten;
Erfassen, durch den Client-Computer, eines biometrischen Elements des Benutzers;
Vergleichen, durch den Client-Computer, des biometrischen Elements mit einem anderen biometrischen Element, das in dem Client-Computer gespeichert ist, um eine erste Vergleichsausgabe bereitzustellen;
Vergleichen, durch den Client-Computer, einer Ableitung des ausgewählten Objekts mit einer Ableitung eines Objekts, das in dem Client-Computer gespeichert ist, um eine zweite Vergleichsausgabe zu erzeugen;
Freigeben, durch den Client-Computer, eines privaten Schlüssels aus einem Schlüsselspeicher des Client-Computers basierend auf i) einer Bestimmung, aus der ersten Vergleichsausgabe, dass das erfasste biometrische Element des Benutzers und das gespeicherte biometrische Element übereinstimmen und ii) einer Bestimmung, aus der zweiten Vergleichsausgabe, dass die Ableitung des ausgewählten Objekts und die Ableitung des gespeicherten Objekts übereinstimmen;
Signieren, durch den Client-Computer, der Abfrage mit dem freigegebenen privaten Schlüssel; und
Senden, durch den Client-Computer und an den Server-Computer, der signierten Abfrage, zur Verifizierung, durch den Server-Computer, der signierten Abfrage mit einem öffentlichen Schlüssel, der dem freigegebenen privaten Schlüssel entspricht.

2. Verfahren nach Anspruch 1, wobei andere Objekte in der Objektliste ebenfalls gemäß den Bildschirmkoordinaten bewegt werden, wobei die Objektliste mit der Abfrage empfangen wird, und wobei das Verfahren ferner umfasst:
vor dem Empfangen der Abfrage und der Objektliste, Übertragen, durch den Client-Computer, einer Client-ID und eines Authentifikators an den Server-Computer, wobei der Server-Computer danach i) die Bildschirmkoordinaten basierend auf einem Zufallsvektor, ii) die Abfrage und iii) die Objektliste erzeugt, und wobei die Bildschirmkoordinaten durch den Server-Computer an den Client-Computer gesendet werden.

3. Verfahren nach Anspruch 1 oder 2, wobei die Bildschirmkoordinaten und die Objektliste durch den Client-Computer von dem Server-Computer zusammen mit der Abfrage empfangen werden.

4. Verfahren nach einem der Ansprüche 1 bis 3, wobei die Objekte in der Objektliste auf der Anzeige des Client-Computers in einem ein- oder zweidimensionalen Array angezeigt werden.

5. Verfahren nach einem der Ansprüche 1 bis 4, wobei das Bestimmen, durch den Client-Computer, dass der Benutzer das Objekt visuell aus der Objektliste ausgewählt hat, ein Erfassen einer Augenbewegung des Benutzers und ein Bestimmen durch ein Augenverfolgungsmodul in dem Client-Computer, dass der Benutzer das Objekt visuell ausgewählt hat, umfasst.

6. Verfahren nach einem der Ansprüche 1 bis 5, wobei das biometrische Element eine Netzhautabtastung des Benutzers ist.

7. Verfahren nach einem der Ansprüche 1 bis 6, wobei das Erfassen des biometrischen Elements des Benutzers erfolgt, bevor der Benutzer das Objekt visuell auswählt.

8. Verfahren nach einem der Ansprüche 1 bis 7, wobei die Abfrage eine Zufallszahl ist.

9. Verfahren nach einem der Ansprüche 1 bis 8, wobei die erste Vergleichsausgabe einen Wahrscheinlichkeitsindikator umfasst.

10. Verfahren nach einem der Ansprüche 1 bis 9, wobei die Ableitung des ausgewählten Objekts und die Ableitung des Objekts Hash-Werte sind.

11. Verfahren nach einem der Ansprüche 1 bis 10, ferner umfassend: Bestimmen, durch den Client-Computer, von Bildschirmkoordinaten, die Augenbewegungen des Benutzers entsprechen, wenn die Augen des Benutzers dem ausgewählten Objekt folgen, wenn sich das ausgewählte Objekt gemäß den Bildschirmkoordinaten bewegt, und wobei der Client-Computer die bestimmten Bildschirmkoordinaten an den Server-Computer sendet, und
wobei der Server-Computer bestimmt, dass die bestimmten Bildschirmkoordinaten mit den Bildschirmkoordinaten übereinstimmen, oder bestimmt, dass ein bestimmter Vektor aus den bestimmten Bildschirmkoordinaten einem Zufallsvektor entspricht, der den Bildschirmkoordinaten entspricht.

12. Verfahren nach Anspruch 11, wobei der Client-Computer bestimmt, dass die bestimmten Bildschirmkoordinaten mit den Bildschirmkoordinaten übereinstimmen, oder bestimmt, dass ein bestimmter Zufallsvektor aus den bestimmten Bildschirmkoordinaten dem Zufallsvektor entspricht, um eine dritte Vergleichsausgabe zu erzeugen, und wobei der Client-Computer die dritte Vergleichsausgabe an den Server-Computer sendet.

13. Verfahren nach einem der Ansprüche 1 bis 12, wobei ein Zufallsvektor und die Objektliste von dem Client-Computer zusammen mit der Abfrage von dem Server-Computer empfangen werden, und wobei die Bildschirmkoordinaten auf dem Zufallsvektor basieren, und wobei das Verfahren ferner umfasst:
Bestimmen, durch den Client-Computer, von Bildschirmkoordinaten, die Augenbewegungen des Benutzers entsprechen, wenn die Augen des Benutzers dem ausgewählten Objekt folgen, wenn sich das ausgewählte Objekt gemäß den bestimmten Bildschirmkoordinaten bewegt, und wobei der Client-Computer die bestimmten Bildschirmkoordinaten oder einen bestimmten Zufallsvektor, der den bestimmten Bildschirmkoordinaten entspricht, an den Server-Computer sendet, und
wobei der Server-Computer bestimmt, dass die bestimmten Bildschirmkoordinaten mit den zuvor gesendeten Bildschirmkoordinaten übereinstimmen, oder bestimmt, dass ein bestimmter Vektor aus den bestimmten Bildschirmkoordinaten dem Zufallsvektor entspricht.

14. Client-Computer, umfassend:
einen Prozessor;
eine Anzeige, die mit dem Prozessor gekoppelt ist; und
ein nicht flüchtiges computerlesbares Medium, umfassend von dem Prozessor ausführbaren Code für ein Durchführen eines Verfahrens nach einem der vorstehenden Ansprüche.

15. Verfahren, Folgendes umfassend:
Übertragen, durch einen Server-Computer an einen Client-Computer, einer Abfrage, zum Anzeigen, durch den Client-Computer, von Objekten aus einer Objektliste an einen
Benutzer;
Bestimmen, durch den Client-Computer,
dass der Benutzer visuell ein Objekt aus der Objektliste ausgewählt hat;
Bewegen, durch den Client-Computer,
des ausgewählten Objekts auf einer Anzeige des Client-Computers gemäß
Bildschirmkoordinaten;
Erfassen, durch den Client-Computer, eines biometrischen Elements des Benutzers;
Vergleichen, durch den Client-Computer, des biometrischen Elements mit einem anderen biometrischen Element, das im Client-Computer gespeichert ist, um eine erste Vergleichsausgabe bereitzustellen;
Vergleichen, durch den Client-Computer,
einer Ableitung des ausgewählten Objekts mit einer Ableitung eines Objekts, das in dem Client-Computer gespeichert ist, um eine zweite Vergleichsausgabe zu erzeugen; Freigeben, durch den Client-Computer, eines privaten Schlüssels aus einem Schlüsselspeicher des Client-Computers basierend auf
i) einer Bestimmung, aus der ersten Vergleichsausgabe, dass das erfasste biometrische Element des Benutzers und das gespeicherte biometrische Element übereinstimmen und
ii) einer Bestimmung, aus der zweiten Vergleichsausgabe, dass die Ableitung des ausgewählten Objekts und die Ableitung des gespeicherten Objekts übereinstimmen; und
Signieren, durch den Client-Computer, der Abfrage mit einem privaten Schlüssel;
Empfangen, durch den Server-Computer, der signierten Abfrage;
Verifizieren, durch den Server-Computer, der signierten Abfrage mit einem öffentlichen Schlüssel, der dem freigegebenen privaten Schlüssel entspricht; und
Bereitstellen von Zugriff auf eine Ressource, nachdem die signierte Abfrage verifiziert wurde
und die erste und die zweite Vergleichsausgabe verifiziert wurden.

## Revendications

1. Procédé comprenant :
la réception, par un ordinateur client, d'un défi provenant d'un ordinateur serveur,
l'affichage par l'ordinateur client, à l'attention d'un utilisateur, d'objets issus d'une liste d'objets,
la détermination, par l'ordinateur client, que l'utilisateur a sélectionné visuellement un objet dans la liste d'objets,
le déplacement, par l'ordinateur client, de l'objet sélectionné sur l'écran de l'ordinateur client selon des coordonnées d'écran,
la capture, par l'ordinateur client, d'une mesure biométrique de l'utilisateur,
la comparaison, par l'ordinateur client, de la mesure biométrique à une autre mesure biométrique stockée dans l'ordinateur client pour fournir une première sortie de comparaison,
la comparaison, par l'ordinateur client, d'une dérivée de l'objet sélectionné à une dérivée d'un objet stocké dans l'ordinateur client pour produire une deuxième sortie de comparaison,
l'émission, par l'ordinateur client, d'une clé privée issue d'une mémoire de clés de l'ordinateur client compte tenu de i) une détermination, à partir de la première sortie de comparaison, que la mesure biométrique de l'utilisateur capturée et la mesure biométrique stockée se correspondent et ii) une détermination, à partir de la deuxième sortie de comparaison, que la dérivée de l'objet sélectionné et la dérivée de l'objet stocké se correspondent,
la signature, par l'ordinateur client, du défi à l'aide de la clé privée émise, et
l'envoi par l'ordinateur client, à destination de l'ordinateur serveur, du défi signé, à des fins de vérification, par l'ordinateur serveur, du défi signé à l'aide d'une clé publique correspondant à la clé privée émise.

2. Procédé selon la revendication 1, dans lequel d'autres objets présents dans la liste d'objets sont également déplacés selon les coordonnées d'écran, ladite liste d'objets étant reçue avec le défi, le procédé comprenant en outre :
avant la réception du défi et de la liste d'objets, la transmission, par l'ordinateur client, d'un identifiant client et d'un authentifiant à l'ordinateur serveur, ledit ordinateur serveur générant ensuite i) les coordonnées d'écran compte tenu d'un vecteur aléatoire, ii) le défi et iii) la liste d'objets, et lesdites coordonnées d'écran étant envoyées par l'ordinateur serveur à l'ordinateur client.

3. Procédé selon la revendication 1 ou 2, dans lequel les coordonnées d'écran et la liste d'objets sont reçues par l'ordinateur client en provenance de l'ordinateur serveur conjointement avec le défi.

4. Procédé selon l'une quelconque des revendications 1 à 3, dans lequel les objets présents dans la liste d'objets sont affichés sur l'écran de l'ordinateur client dans un tableau à une ou deux dimensions.

5. Procédé selon l'une quelconque des revendications 1 à 4, dans lequel la détermination, par l'ordinateur client, que l'utilisateur a sélectionné visuellement l'objet dans la liste d'objets comprend la détection du mouvement oculaire de l'utilisateur et la détermination, par un module de suivi oculaire de l'ordinateur client, que l'utilisateur a sélectionné visuellement l'objet.

6. Procédé selon l'une quelconque des revendications 1 à 5, dans lequel la mesure biométrique est une empreinte rétinienne de l'utilisateur.

7. Procédé selon l'une quelconque des revendications 1 à 6, dans lequel la capture de la mesure biométrique de l'utilisateur se produit avant que l'utilisateur ne sélectionne visuellement l'objet.

8. Procédé selon l'une quelconque des revendications 1 à 7, dans lequel le défi est un nombre aléatoire.

9. Procédé selon l'une quelconque des revendications 1 à 8, dans lequel la première sortie de comparaison comprend un indicateur de vraisemblance.

10. Procédé selon l'une quelconque des revendications 1 à 9, dans lequel la dérivée de l'objet sélectionné et la dérivée de l'objet sont des valeurs de hachage.

11. Procédé selon l'une quelconque des revendications 1 à 10, comprenant en outre :
la détermination, par l'ordinateur client, de coordonnées d'écran correspondant aux mouvements oculaires de l'utilisateur lorsque les yeux de l'utilisateur suivent l'objet sélectionné tandis que l'objet sélectionné se déplace selon les coordonnées d'écran, ledit ordinateur client envoyant les coordonnées d'écran déterminées à l'ordinateur serveur, et
ledit ordinateur serveur déterminant que les coordonnées d'écran déterminées correspondent aux coordonnées d'écran ou déterminant qu'un vecteur déterminé à partir des coordonnées d'écran déterminées correspond à un vecteur aléatoire correspondant aux coordonnées d'écran.

12. Procédé selon la revendication 11, dans lequel l'ordinateur client détermine que les coordonnées d'écran déterminées correspondent aux coordonnées d'écran, ou détermine qu'un vecteur aléatoire déterminé à partir des coordonnées d'écran déterminées correspond au vecteur aléatoire pour produire une troisième sortie de comparaison, ledit ordinateur client envoyant la troisième sortie de comparaison à l'ordinateur serveur.

13. Procédé selon l'une quelconque des revendications 1 à 12, dans lequel un vecteur aléatoire et la liste d'objets sont reçus par l'ordinateur client en provenance de l'ordinateur serveur conjointement avec le défi, lesdites coordonnées d'écran reposant sur le vecteur aléatoire, le procédé comprenant en outre :
la détermination, par l'ordinateur client, de coordonnées d'écran correspondant aux mouvements oculaires de l'utilisateur lorsque les yeux de l'utilisateur suivent l'objet sélectionné tandis que l'objet sélectionné se déplace selon les coordonnées d'écran déterminées, ledit ordinateur client envoyant, à l'ordinateur serveur, les coordonnées d'écran déterminées ou un vecteur aléatoire déterminé correspondant aux coordonnées d'écran déterminées, et
ledit ordinateur serveur déterminant que les coordonnées d'écran déterminées correspondent aux coordonnées d'écran envoyées précédemment ou déterminant qu'un vecteur déterminé à partir des coordonnées d'écran déterminées correspond au vecteur aléatoire.

14. Ordinateur client comprenant :
un processeur,
un écran couplé au processeur, et
un support non transitoire lisible par ordinateur comprenant un code, exécutable par le processeur, pour réaliser un procédé selon l'une quelconque des revendications précédentes.

15. Procédé comprenant :
la transmission par un ordinateur serveur, à destination d'un ordinateur client, d'un défi,
l'affichage par l'ordinateur client, à l'attention d'un utilisateur, d'objets issus d'une liste d'objets,
la détermination, par l'ordinateur client, que l'utilisateur a sélectionné visuellement un objet dans la liste d'objets,
le déplacement, par l'ordinateur client, de l'objet sélectionné sur un écran de l'ordinateur client selon des coordonnées d'écran,
la capture, par l'ordinateur client, d'une mesure biométrique de l'utilisateur,
la comparaison, par l'ordinateur client, de la mesure biométrique à une autre mesure biométrique stockée dans l'ordinateur client pour fournir une première sortie de comparaison ;
la comparaison, par l'ordinateur client, d'une dérivée de l'objet sélectionné à une dérivée d'un objet stocké dans l'ordinateur client pour produire une deuxième sortie de comparaison,
l'émission, par l'ordinateur client, d'une clé privée issue d'une mémoire de clés de l'ordinateur client compte tenu de
i) une détermination, à partir de la première sortie de comparaison, que la mesure biométrique de l'utilisateur capturée et la mesure biométrique stockée se correspondent et
ii) une détermination, à partir de la deuxième sortie de comparaison, que la dérivée de l'objet sélectionné et la dérivée de l'objet stocké se correspondent,
la signature, par l'ordinateur client, du défi à l'aide d'une clé privée,
la réception, par l'ordinateur serveur, du défi signé,
la vérification, par l'ordinateur serveur, du défi signé à l'aide d'une clé publique correspondant à la clé privée émise, et
la fourniture de l'accès à une ressource après la vérification du défi signé et la vérification des première et deuxième sorties de comparaison.
